Europäisches Patentamt

European Patent Office

Office européen des brevets

(11) Publication number: **0 075 899**
**B1**

(12) **EUROPEAN PATENT SPECIFICATION**

(45) Date of publication of patent specification: **12.06.85**

(21) Application number: **82108868.9**

(22) Date of filing: **24.09.82**

(51) Int. Cl.⁴: **C 08 F 6/28** // (C08F6/28, 10:02)

(54) **Process for transferring solids.**

(30) Priority: **25.09.81 US 305729**

(43) Date of publication of application:
**06.04.83 Bulletin 83/14**

(45) Publication of the grant of the patent:
**12.06.85 Bulletin 85/24**

(84) Designated Contracting States:
**BE DE FR GB IT SE**

(56) References cited:
**EP-A-0 022 386**

(73) Proprietor: **UNION CARBIDE CORPORATION**
**Old Ridgebury Road**
**Danbury Connecticut 06817 (US)**

(72) Inventor: **Garner, Billy Jack**
**1622 Greystone Place**
**Charleston West Virginia (US)**

(74) Representative: **Barz, Peter, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

Courier Press, Leamington Spa, England.

## Description

The present invention relates to a process for transferring solids contained in a first gaseous medium and at a controlled pressure from a first zone into a second zone containing a second gaseous medium under a controlled pressure without passage of said gas from said second zone to said first zone.

In another aspect the present invention relates to a process for transferring granular, low pressure polymerized low density ethylene-hydrocarbon polymers contained in a gaseous medium and at a controlled pressure from a first zone into a second zone containing a second gaseous medium under a controlled pressure without passage of said gas from said second zone to said first zone.

Low density ethylene polymers (i.e., ethylene polymers having a density of about 0.94 g/cc and lower) have in the past been made commercially by a high pressure (i.e., at pressures of 15,000 psi and higher) homopolymerization of ethylene in stirred and elongated tubular reactors in the absence of solvents using free radical initiators. Recently, low pressure processes for preparing low density ethylene polymers have been developed which have significant advantages as compared to the conventional high pressure process. One such low pressure process is disclosed in European Patent Publication No. 4747. Ethylene polymers made by such a low pressure process may be formed into film by known techniques and such film is extremely tough and is useful in packaging applications.

The above-identified European application discloses a low pressure, gas phase process for producing low density ethylene copolymers having a wide density range of about 0.91 to about 0.94 g/cc and a melt flow ratio of from about 22 to about 36 and which have a relatively low residual catalyst content and a relatively high bulk density. The process comprises copolymerizing ethylene with one or more $C_3$ to $C_8$ alpha-olefin hydrocarbons in the presence of a high activity magnesium-titanium complex catalyst prepared under specific activation conditions with an organo aluminum compound and impregnated in a porous inert carrier material. The copolymers (as applied to these polymers, the term "copolymers" as used herein is also meant to include polymers of ethylene with 2 or more comonomers) thus prepared are copolymers of predominantly (at least about 90 mole percent) ethylene and a minor portion (not more than 10 mole percent) of one or more $C_3$ to $C_8$ alpha-olefin hydrocarbons which should not contain any branching on any of their carbon atoms which is closer than the fourth carbon atom. Examples of such alpha-olefin hydrocarbons are propylene, butene-1, hexene-1, 4-methyl pentene-1 and octene-1.

The catalyst may be prepared by first preparing a precursor from a titanium compound (e.g., $TiCl_4$), a magnesium compound (e.g., $MgCl_2$) and an electron donor compound (e.g., tetrahydrofuran) by, for example, dissolving the titanium and magnesium compounds in the electron donor compound and isolating the precursor by crystallization. A porous inert carrier (such as silica) is then impregnated with the precursor such as by dissolving the precursor in the electron donor compound, admixing the support with the dissolved precursor followed by drying to remove the solvent. The resulting impregnated support may be activated by treatment with an activator compound (e.g., triethyl aluminum).

The polymerization process may be conducted by contacting the monomers, in the gas phase, such as in a fluidized bed, with the activated catalyst at a temperature of about 30 to 105°C and a low pressure of up to about 1000 psi (e.g., from about 150 to 350 psi).

The resulting granular polymers may contain gaseous unpolymerized monomers including hydrocarbon monomers. These gaseous monomers should be removed from the granular resin for safety reasons, since there is a danger of explosion if the hydrocarbon monomer concentration becomes excessive in the presence of oxygen. In addition, proper disposal of the hydrocarbons is required in order to meet environmental standards concerning hydrocarbon emissions.

The prior art teaches techniques for removing volatile unpolymerized monomers from polymers of the corresponding monomers. For example, U.S. Patent No. 4,197,399 discloses a process for removing residual vinyl chloride monomer present after polymerization of vinyl chloride polymers in the form of an aqueous dispersion. The process comprises heating the polymer at least to its glass transition temperature and stripping the polymer at the elevated temperature by an inert fluid such as air, nitrogen or steam.

U.S. Patent No. 3,594,356 discloses a polymer recovery process for the removal of polymer from solvent. After an initial flashing operation and sizing the resulting solid polymer particles, the polymer is purged in two stages with an inert gas such as nitrogen. Any unreacted monomer may be removed by venting and/or flashing.

U.S. Patent No. 3,450,183 discloses a process for the recovery of polyolefin solids from a solution containing same, which comprises flashing to obtain a solid concentrate and thereafter subjecting the chopped solids to a mixing action countercurrent to a stream of inert purge gas such as nitrogen. Any unreacted olefin can be removed by venting and/or flashing.

More recently EP—A—47077 discloses a degassing of unpolymerized gaseous monomers from solid olefin polymers. The disclosed process comprises conveying the solid polymer, e.g., in granular form, to the top of a purge vessel by means of an inert gas stream, feeding an inert gas stream to the bottom of the purge vessel and countercurrently contacting the solid polymer with the inert gas purge stream to strip away the gaseous monomers evolved from the solid polymer, and recycling a portion of the resulting stream to the purge vessel. In one embodiment, the recycle serves as the conveying gas and in another embodiment as the purge stream. The process is especially useful in purging gaseous unpolymerized hydrocarbon monomers from low pressure-polymerized, low density ethylene-hydrocarbon copolymers.

According to conventional procedures the nitrogen-purged resin is metered from the purge vessel to a nitrogen-conveying system by a rotary feeder. More recently due to energy and economic requirements, the nitrogen conveying system has been replaced by an air conveying system. Unfortunately however during resin transfer from the purge vessel to the air conveying line, air is transferred from the conveying system to the purge vessel by the pumping action of the rotary feeder. This air can then migrate from the purge vessel and will eventually reach the polymerization reactor. This is undesirable as oxygen is a catalyst poison and any oxygen introduced to the reactor will modify the product properties. Moreover, this air can also mix with hydrocarbon gases to form potentially explosive mixtures in the purge vessel.

Broadly contemplated the present invention provides a process for transferring solids contained in a first gaseous medium and at a controlled pressure from a first zone into a second zone containing a second gaseous medium under a controlled pressure without passage of gas from said second zone to said first zone, which comprises: (1) conveying said contained solids from said first zone to an intermediate zone wherein a moving bed of settled solids is formed in said intermediate zone in a manner such that said moving bed of settled solids defines a vertically elongated portion of solids extending upward from a wider encased base portion of said solids thus providing a void space in said intermediate zone of lower pressure than each of the pressures of said first and second zones, said void space being disposed above the upper surface of said base portion of solids and adjacent to a portion of the outer periphery of said elongated portion of solids (2) continuously passing settled solids from said intermediate zone to said second zone whereby any gas separately entering said intermediate zone from said first and second zones pass through a portion of said settled bed of solids and into said void space and (3) continuously discharging gases from said void space.

In a more specific aspect, the present invention is directed to a process for transferring granular, low pressure polymerized low density ethylene-hydrocarbon polymers contained in a gaseous medium such as nitrogen and at a controlled pressure from a first zone into a second zone containing a second gaseous medium such as air under another controlled pressure without passage of gas from said second zone to said first zone.

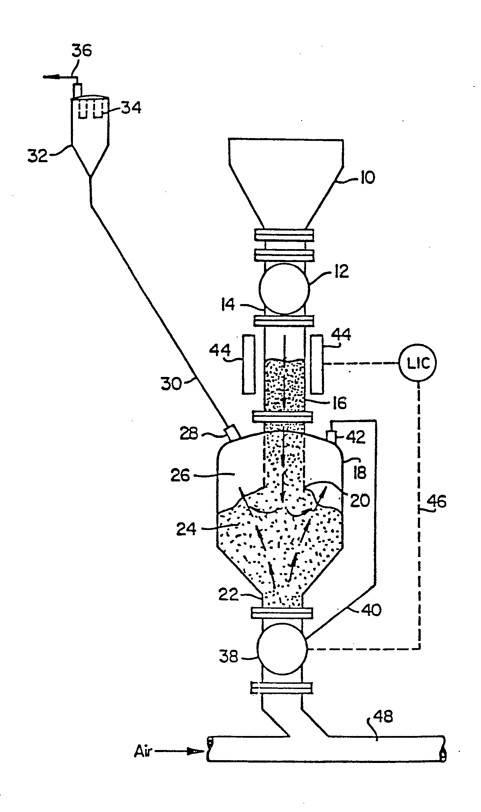

The sole figure in the drawing schematically shows an apparatus which can be utilized to illustrate the process of the instant invention.

For purposes of ease of description only, the present invention will be described herein with reference to low pressure-low density ethylene copolymers, although it is to be expressly understood that the invention is not to be limited thereby. Rather, it is the intention to be limited only by the scope of the claims appended thereto. For example, the gas barrier process of the present invention may be employed to transfer solids in general, and particularly solid olefin polymers other than low pressure-low density ethylene copolymers, such as homopolymers of ethylene and propylene and other copolymers of ethylene.

As used herein, the language "low pressure-low density ethylene copolymers" means copolymers of at least about 90 mole percent ethylene with no more than about 10 mole percent of at least one $C_3$ to $C_8$ alpha-olefin hydrocarbon comonomer (e.g., propylene, butene-1, hexene-1, 4-methyl pentene-1 and octene-1) which are copolymerized under low pressure (e.g., 150 to 350 psi). Such copolymers normally have a density no greater than about 0.94 g/cc and typically their density is from about 0.91 to about 0.94 g/cc. In addition, such copolymers generally have a narrow molecular weight distribution range (Mw/Mn) of about 2.7 to 4.5. A specific example of one method for preparing such copolymers is more fully described in the aforementioned European Patent Publication No. 4747, and reference may be made to this application for a more complete disclosure. The gas phase process disclosed in this application produces granular polymers which may have an average particle size diameter on the order of about 0.03 to about 0.05 inch.

Depending upon the conditions of reaction and the particular hydrocarbon comonomer, the resulting solid low pressure-low density ethylene copolymers may contain an amount of gaseous unpolymerized monomers (which may include ethylene, one or more of the hydrocarbon comonomers, saturated hydrocarbons and non-reactive hydrocarbon olefins) which may be as high as about 1.5 to 4.5 weight percent. Environmental restrictions may prevent the direct venting to the atmosphere of such hydrocarbons and more importantly, safety considerations generally require the hydrocarbon content to be reduced to avoid the possibility of explosion upon contact with oxygen. The invention disclosed in EP—A—47077 previously referred to may be employed to acomplish these desired objectives.

Referring to the drawing, there is illustrated a first zone which includes a purge vessel or tank 10 operated under conditions and in a manner such as is disclosed in EP—A—47077.

The resin is fed to the purge vessel 10 and which is designed such that the resin flows downwardly through the vessel in substantially plug flow fashion. By "plug flow" is meant equal movement of the resin particles throughout a cross-section of the purge vessel such that all of the resin particles have a substantially equal residence time in the vessel.

The purged resin which is contained in a gaseous medium is directed e.g., by gravity to a conventional rotary feeder 12. Resin discharges from rotary feeder 12 onto a vertical column of settled resin in conduit 16. The resin in conduit 16 is contacted with a gaseous stream such as a nitrogen stream introduced through line 14 into or just below the rotary feeder housing. In the intermediate zone the resin and gas follow a path as indicated by arrows through conduit 16 and the lower end of which extends about one third the vertical distance into vessel or container 18. Due to the shape of conduit 16 and container 18, a moving bed of resin is formed. As will be seen in the drawing, the moving bed of resin assumes the shape of conduit 16 so that a vertically elongated portion of resin is disposed about two thirds of the distance from the exit end 20 of conduit 16. The resin from conduit 16 settles in the lower half of container 18, which has a cross-section at the exit end 20 of conduit 16 substantially smaller than the cross-section of container 18. As will be seen from the drawing, container 18 tapers at its lower end so that the exit end 22 has about the same cross-section as conduit 16. Thus, there is formed in the intermediate zone a vertically elongated portion of resin extending upward from a wider encased base portion of resin 24.

Due primarily to the shape of container 18 and conduit 16 and their relative positions, a void space 26 is formed above the upper surface of the base portion of resin adjacent a portion of the outer periphery of conduit 16. The container 18 is provided with vent 28 which discharges gas through line 30 to vessel 32 containing conventional dust collector 34. The purpose of the dust collector 34 is to prevent any resin particles from being carried out of the top of the vessel 32 through line 36. Conventional dust collectors, such as commercially available bag filters, may be employed. The resin in container 18 is discharged from the container through a conventional variable speed rotary feeder 38 and enters a second zone as indicated in the drawing.

As will be seen from the drawing the apparatus is provided with a vent line 40 which indicates at rotary feeder 38 and enters container 18 through vent 42. In this manner, a portion of the air from the second zone i.e. air entrapped between the vanes of rotary feeder 38, is directed through the vent line 40 directly into void space 26.

In addition the speed of the rotary feeder 38 is determined by the level of solids in conduit 16 and is regulated by means of conventional nuclear level sensors 44 which are electrically connected to a conventional level indicating controller (LIC) & rotary feeder 38 through instrument control line 46. Thus, if the level of solids in conduit 16 is below that which is desired, nuclear level sensor will detect this and will cause rotary feeder to decrease in rotary speed. On the other hand if the level of solids in conduit 16 is above that desired, rotary feeder 38 will increase in rotary speed thereby discharging more solids from container 18.

As the resin is discharged from rotary feeder 38, it enters transfer conduit or conveying line 48 in the second zone as indicated in the drawing. A source of air is provided through transfer conduit from a conventional air source and the resin and air are directed to cooling and to subsequent processing prior to storage.

Air which seeps into rotary feeder 38 travels a path indicated by the arrows and ultimately enters void space 26 which is maintained at a lower pressure than the pressure in purge vessel 10 and transfer conduit 48. The stream of gas flowing from the first zone downwardly through conduit 16 also prevents migration of air from rotary feeder 38. Thus, any gases entering the intermediate zone from the first and second zones pass through a portion of settled resin as indicated by the arrows, and enter void space 26 where they are discharged from the void space as explained previously.

Temperatures employed for the process are not particularly critical. In the first zone, the temperature of the resin in the purge vessel 10 is not critical and is normally dependent upon the temperature at which it is obtained from the polymerization reaction. However, the resin temperature affects the residence times. In the case of low pressure-low density ethylene copolymers, the resin may be obtained in the form of solid particles directly from the polymerization reaction at a temperature of about 80—85°C. It is economically desirable not to add additional heat to the resin before feeding same to the purge vessel. It is also necessary to keep the resin temperature lower than its softening or melting point which in the case of low pressure-low density ethylene copolymers is about 100—110°C. The higher the temperature in the purge vessel, the higher the rate of diffusion of the monomer gases from the solid to the purge gas. However, economic considerations may prevent additional heat from being added to the resins. Satisfactory results can be obtained by directly feeding the resin at its reaction temperature to the purging operation, even considering the fact that its temperature may decrease or increase slightly due to the temperature of the conveying gas.

The inert purge gas is preferably fed to the bottom of the purge vessel at ambient temperature although any temperature up to about the temperature of the resin is acceptable. It is also preferred to provide a low positive pressure in the purge vessel since the rate of gaseous monomer diffusion is higher at lower pressures. It is however also preferred to maintain a positive pressure in the purge vessel and to avoid a vacuum since any vacuum may have the effect of drawing into the system air or oxygen which would create safety problems in view of the explosive nature of the hydrocarbon monomers at higher concentrations. Although the proper pressure depends on many factors, those skilled in the art are capable of making that determination using known mass transfer techniques. In the case of low pressure-low density ethylene copolymers, the pressure of the purge vessel can be about 1 psig to about 15 psig, and preferably, about 1 psig to about 2 psig.

The rate of flow of resin through the purge vessel is not critical and depends upon the minimum residence time necessary to reduce the concentration of gaseous monomers in the resin to the desired level. It is preferred to reduce the hydrocarbon monomer gas content in the resin to below about 25—50 parts per million by weight, although the extent to which the hydrocarbon monomer concentration must be reduced depends upon both environmental and safety requirements. In any event, the purging process of

4

the present invention is effective to substantially reduce the hydrocarbon monomer gas content of low pressure-low density ethylene copolymer resins.

The inert gases employed in the practice of the present invention may be any gas which is inert both to the resin being treated and the particular gaseous monomers being removed. The preferred purge gas is nitrogen although other gases inert in the process may be employed. It is preferred that the nitrogen content of the purge gas be at least about 90% and that oxygen be excluded from the purge gas. The maximum permissible oxygen content varies depending upon the particular hydrocarbon monomer gas being stripped. As the concentration of hydrocarbons increases in the presence of oxygen, the danger of explosion also increases, and this level varies with different hydrocarbons. Ideally, there should be no oxygen in the purge gas although a small amount can be tolerated depending upon the hydrocarbon concentration in the purge vessel and the monomers being stripped. Those skilled in the art can easily determine the tolerable oxygen levels given a particular monomer. Of course, the inert purge gas may also include small amounts of the gaseous monomers, although as their construction increases, their diffusion rate and hence the resin residence time will be affected as discussed above. Other advantages of employing relatively pure nitrogen as a purge gas are that more hydrocarbon gases can be stripped from the resin particles and any pure nitrogen that may be discharged with the exiting resins does not contribute to atmospheric emissions as would gases containing impurities.

In the intermediate zone, the pressure in the void space 26 is less than pressures in the first and second zones. In general the pressure is about −0.5 psig to 2.0 psig and preferably −0.1 psig to 0.3 psig. Temperatures in the intermediate zone are generally within the range of about 60 to 90°C and preferably 75 to 85°C.

In the second zone temperatures are not critical and pressures can vary between about 8 to about 14 psig, and preferably about 10 to 12 psig. The second zone pressure can also in some cases be slightly negative gauge pressure, when a "pull" or vacuum conveying system is used for the second zone. The temperature of the conveying air supply can be about 40—60°C and preferably about 50°C.

Example 1

An ethylene-1-butene copolymer (density=0.918 g/cc; 2.0 Melt Index) is prepared by the gas phase process disclosed in the copending applications described above. Using apparatus set up as shown in the drawing, the copolymer particles are purged with pure nitrogen and directed through the apparatus under the mass balance conditions in Table I below:

5

TABLE I

| Component/stream | 1<br>From purge vessel (10) to upper rotary feeder (12) | 2<br>N₂ Sweep through line (14) | 3<br>From rotary feeder (12) to vessel (18) | 4<br>From lower rotary feeder (38) to conveying line (48) | 5<br>From vessel (18) to atm. | 6<br>Conveying air supply | 7<br>Resin to cooling |
|---|---|---|---|---|---|---|---|
| Air, #/hr. | 0 | 0 | 0 | 445* | 445 | 6027 | 5,582 |
| Nitrogen, #/hr. | 59 | 27 | 86 | Nil | 86 | 0 | 0 |
| Resin, #/hr. | 11,000 | 0 | 11,000 | 11,000 | 0 | 0 | 11,000 |
| Temperature, °C | 80 | Ambient | 80 | 75 | 70 | 50 | 75 |
| Pressure, psig | 1—2 | 0.2 | 0.2 | 10—12 | 0.1—0.2 | 10—12 | 10—12 |

*Opposite Resin Flow

Example 2

The same polymer as in Example 1 is polymerized and the procedure of Example 1 is repeated except that the air feeds and the amount of resin is increased. The results are shown in Table II below:

TABLE II

| Component/stream | 1<br>From purge vessel (10) to upper rotary feeder (12) | 2<br>N₂ Sweep through line (14) | 3<br>From rotary feeder (12) to vessel (18) | 4<br>From lower rotary feeder (38) to conveying line (48) | 5<br>From vessel (18) to atm. | 6<br>Conveying air supply | 7<br>Resin to cooling |
|---|---|---|---|---|---|---|---|
| Air, #/hr. | 0 | 0 | 0 | 621* | 621 | 10,697 | 10,076 |
| Nitrogen, #/hr. | 64 | 22 | 86 | Nil | 86 | 0 | 0 |
| Resin, #/hr. | 18,750 | 0 | 18,750 | 18,750 | 0 | 0 | 18,750 |
| Temperature, °C | 80 | Ambient | 80 | 75 | 70 | 50 | 75 |
| Pressure, psig | 1—2 | 0.2 | 0.2 | 10—12 | 0.1—0.2 | 10—12 | 10—12 |

*Opposite Resin Flow

**Claims**

1. A process for transferring solids contained in a first gaseous medium and at a controlled pressure from a first zone into a second zone containing a second gaseous medium under a controlled pressure without passage of gas from said second zone to said first zone, which comprises: (1) conveying said contained solids from said first zone to an intermediate zone wherein a moving bed of settled solids is formed in said intermediate zone in a manner such that said moving bed of settled solids defines a vertically elongated portion of solids extending upward from a wider encased base portion of said solids thus providing a void space in said intermediate zone of lower pressure than each of the pressures of said first and second zones, said void space being disposed above the upper surface of said base portion of solids and adjacent to a portion of the outer periphery of said elongated portion of solids (2) continuously passing settled solids from said intermediate zone to said second zone whereby any gas separately entering said intermediate zone from said first and second zones pass through a portion of said settled bed of solids and into said void space and (3) continuously discharging gases from said void space.

2. A process according to claim 1 wherein said first gaseous medium comprises nitrogen.

3. A process according to claim 1 or 2 wherein said second gaseous medium comprises air.

4. A process according to any of claims 1—3 wherein the pressure of said first zone is lower than the pressure in said second zone.

5. A process according to any of claims 1—4 wherein said contained solids are conveyed to said intermediate zone by a first rotary feeder.

6. A process according to claim 5 wherein said solids are contacted with a gaseous stream in said intermediate zone.

7. A process according to claim 6 wherein said gaseous stream is nitrogen.

8. A process according to any of claims 1—7 wherein said settled solids are passed from said intermediate zone to said second zone by a second rotary feeder.

9. A process according to any of claims 1—8 wherein the solids are granular, low pressure polymerized low density ethylene-hydrocarbon polymers.

**Patentansprüche**

1. Verfahren zum Überführen von Feststoffen, die in einem ersten gasförmigen Medium und unter geregeltem Druck enthalten sind, von einer ersten Zone in eine zweite Zone, die ein zweites gasförmiges Medium unter einem geregelten Druck enthält, ohne Durchtritt von Gas von der zweiten Zone zu der ersten Zone, dadurch gekennzeichnet, dass man (1) die enthaltenen Feststoffe von der ersten Zone zu einer Zwischenzone fördert, wobei in der Zwischenzone in Fliessbett aus abgesetzten Feststoffen derart gebildet wird, dass das Fliessbett aus abgesetzten Feststoffen einen vertikal gestreckten Teil der Feststoffe definiert, der sich von einem breiteren umschlossenen Bodenteil der Feststoffe nach oben erstreckt, so dass in der Zwischenzone ein Leerraum von niedrigerem Druck als den Drücken der ersten und zweiten Zone entsteht, wobei der Leerraum über der oberen Oberfläche des Bodenteils der Feststoffe und benachbart zu einem Teil des Aussenumfangs des gestreckten Teils der Feststoffe angeordnet ist, (2) kontinuierlich abgesetzte Feststoffe von der Zwischenzone zu der zweiten Zone leitet, wodurch jegliches Gas, das getrennt in die Zwischenzone aus der ersten und zweiten Zone eintritt, durch einen Teil des abgesetzten Bettes von Feststoffen und in den Leerraum strömt und (3) kontinuierlich Gase aus dem Leerraum ableitet.

2. Verfahren nach Anspruch 1, worin das erste gasförmige Medium Stickstoff umfasst.

3. Verfahren nach Anspruch 1 oder 2, worin das zweite gasförmige Medium Luft umfasst.

4. Verfahren nach irgendeinem der Ansprüche 1 bis 3, worin der Druck in der ersten Zone niedriger ist als der Druck in der zweiten Zone.

5. Verfahren nach irgendeinem der Ansprüche 1 bis 4, worin die enthaltenen Feststoffe mit einem ersten Rotationsförderer in die Zwischenzone gefördert werden.

6. Verfahren nach Anspruch 5, worin die Feststoffe mit einem gasförmigen Strom in der Zwischenzone in Kontakt gebracht werden.

7. Verfahren nach Anspruch 6, worin der gasförmige Strom Stickstoff ist.

8. Verfahren nach irgendeinem der Ansprüche 1 bis 7, worin die abgesetzten Feststoffe mit einem zweiten Rotationsförderer von der Zwischenzone zu der zweiten Zone gefördert werden.

9. Verfahren nach irgendeinem der Ansprüche 1 bis 8, worin die Feststoffe Granulate von bei niedrigem Druck polymerisierten Ethylen-Kohlenwasserstoff-Polymeren von niedriger Dichte sind.

**Revendications**

1. Procédé pour transférer des solides, contenus dans un premier milieu gazeux et à une pression réglée, d'une première zone dans une seconde zone contenant un second milieu gazeux sous une pression réglée, sans passage de gaz de ladite seconde zone vers ladite première zone, qui consiste: (1) à transporter lesdits solides contenus de ladite première zone vers une zone intermédiaire dans laquelle un lit mobile de solides déposés est formé dans ladite zone intermédiaire d'une manière telle que ledit lit mobile de solides déposés définit une partie de solides allongée verticalement, s'élevant d'une partie de base renfermée, plus

**0 075 899**

large, desdits solides, établissant ainsi un espace vide dans ladite zone intermédiaire, de pression inférieure à chacune des pressions desdites première et seconde zones, ledit espace vide étant disposé au-dessus de la surface supérieure de ladite partie de base des solides et à proximité immédiate d'une partie de la périphérie extérieure de ladite partie allongée des solides, (2) à faire passer en continu des solides déposés de ladite zone intermédiaire dans ladite seconde zone afin que tout gaz entrant séparément dans ladite zone intermédiaire, à partir desdites première et seconde zones, passe à travers une partie dudit lit de solides déposés et pénètre dans ledit espace vide, et (3) à décharger en continu des gaz dudit espace vide.

2. Procédé selon la revendication 1, dans lequel ledit premier milieu gazeux comprend de l'azote.

3. Procédé selon la revendication 1 ou 2, dans lequel ledit second milieu gazeux comprend de l'air.

4. Procédé selon l'une quelconque des revendications 1—3, dans lequel la pression de ladite première zone est inférieure à la pression dans ladite seconde zone.

5. Procédé selon l'une quelconque des revendications 1—4, dans lequel lesdits solides contenus sont transportés vers ladite zone intermédiaire par un premier distributeur rotatif.

6. Procédé selon la revendication 5, dans lequel lesdits solides sont en contact avec un courant gazeux dans ladite zone intermédiaire.

7. Procédé selon la revendication 6, dans lequel ledit courant gazeux est de l'azote.

8. Procédé selon l'une quelconque des revendications 1—7, dans lequel on fait passer lesdits solides déposés de ladite zone intermédiaire dans ladite seconde zone à l'aide d'un second distributeur rotatif.

9. Procédé selon l'une quelconque des revendications 1—8, dans lequel les solides sont des polymères granulaires d'hydrocarbures et d'éthylène basse densité, polymérisés à basse pression.

8